Europäisches Patentamt

European Patent Office

Office européen des brevets

(19)

(11) Veröffentlichungsnummer : **0 074 469**

**B1**

(12) **EUROPÄISCHE PATENTSCHRIFT**

(45) Veröffentlichungstag der Patentschrift :
05.03.86

(51) Int. Cl.⁴ : **F 16 B 13/02**

(21) Anmeldenummer : **82105612.4**

(22) Anmeldetag : **25.06.82**

(54) **Befestigungselement für die Befestigung von wärme- und schallisolierenden Materialien.**

(30) Priorität : **16.09.81 DEU 8127048**

(43) Veröffentlichungstag der Anmeldung :
**23.03.83 Patentblatt 83/12**

(45) Bekanntmachung des Hinweises auf die Patenterteilung : **05.03.86 Patentblatt 86/10**

(84) Benannte Vertragsstaaten :
**AT BE CH DE FR GB IT LI LU NL SE**

(56) Entgegenhaltungen :
**DE-A- 2 339 894**
**DE-A- 2 712 148**
**DE-A- 2 712 670**
**DE-B- 2 047 185**
**DE-B- 2 305 528**
**FR-A- 1 064 745**
**FR-A- 1 316 222**
**GB-A- 1 087 393**
**US-A- 3 461 772**

(73) Patentinhaber : **EJOT Adolf Böhl GmbH & Co. KG**
**Adolf-Böhl-Strasse 7**
**D-5920 Bad Berleburg 4 - Berghausen (DE)**

(72) Erfinder : **Kocherscheidt, H.W.**
**Breslauer Strasse 12**
**D-5920 Bad Berleburg 1 (DE)**
Erfinder : **de Gero, Paul**
**Oberes Loh 36**
**D-5920 Bad Berleburg 16 (DE)**
Erfinder : **Riecke, Ernst-Hermann**
**Ostpreussenstrasse 5**
**D-5920 Bad Berleburg 4 (DE)**

(74) Vertreter : **Schlee, Richard, Dipl.-Ing. et al**
**Patentanwälte Dipl.-Ing. R. Schlee Dipl.-Ing. A. Mis-**
**sling Bismarckstrasse 43**
**D-6300 Lahn-Giessen 1 (DE)**

EP 0 074 469 B1

Jouve, 18, rue St-Denis, 75001 Paris, France

## Beschreibung

Die Erfindung bezieht sich auf ein Befestigungselement für die Befestigung von wärme- und schallisolierenden Platten an einer Unterkonstruktion, mit einem Halteteil, der eine großflächige Druckplatte aus Kunststoff und eine mit der Druckplatte einstückige Hülse in Form eines Spreizdübels aufweist, und einem Spreizstift aus Metall, der in die Hülse einschlagbar ist und im eingeschlagenen Zustand bis zur Druckplatte reicht.

Wärme- und schallisolierende Platten dienen in der Regel dem Schutz von Gebäuden gegen Wärmeverluste und Schallbelästigungen und werden häufig an Gebäudeaußenseiten befestigt. An Befestigungselemente für die Befestigung solcher Platten wird die Forderung gestellt, daß sie keine wärmeleitenden Brücken bilden, die Wärme von der Unterkonstruktion an die Außenseiten der wärmeisolierenden Platten transportieren. Bei der Isolierung von Gebäudeaußenwänden liegen die Druckplatten der Befestigungselemente dicht unterhalb der Oberfläche einer Putzschicht. Dies gilt insbesondere für sogenannten Dispersionsputz, der eine nur geringe Schichtdicke hat. Um Rostflecken am Putz zu vermeiden, darf keine Feuchtigkeit mit rostenden Metallteilen in Berührung kommen. Rostflecken ließen sich zwar durch Verwendung von rostfreiem Stahl für das stiftförmige Metallteil vermeiden, jedoch würde das Befestigungselement dadurch teuer. Rostflecken sind auch vermeidbar, wenn das Befestigungselement vollständig aus Kunststoff besteht. Solche Befestigungselemente sind jedoch nur dann verwendbar, wenn die Haltekräfte nicht allzu groß zu sein brauchen.

Es hat sich gezeigt, daß für die sichere Halterung von mit Putz belegten wärmedämmenden Wandplatten nicht auf Metallstifte verzichtet werden kann, die sich bis zur Druckplatte hin erstrecken.

Befestigungselemente der eingangs genannten Art haben den Vorteil, daß der aus Metall, im allgemeinen aus Stahl, bestehende Spreizstift auch dann noch Haltekräfte auf die befestigte Platte ausübt, wenn die Kunststoffteile des Halteelementes durch Brandeinwirkung zerstört sind.

Bei einem Befestigungselement der eingangs genannten Art (US-A-3 461 772, Fig. 6, 7) hat der Spreizstift einen angeformten flachen Kopf, der aus dem gleichen Material besteht wie der Spreizstift im übrigen. Für Außenverkleidungen ist das bekannte Befestigungselement allenfalls dann brauchbar, wenn der Spreizstift aus nichtrostendem Material besteht. Die Verwendung solchen Materials verteuert das Befestigungselement insgesamt erheblich. Auch bei Verwendung von nichtrostendem Material bleibt der Nachteil, daß der Spreizstift eine wärmeleitende Brücke bildet, so daß der Kopf des Stiftes eine höhere Temperatur aufweist als die Putzschicht, die in aller Regel das Befestigungselement überdeckt.

Die örtlich vorhandenen wärmeren Stellen der Putzoberfläche neigen stärker zum Verschmutzen als die Putzoberfläche im übrigen. Dadurch entstehen örtlich stärkere Verschmutzungen, die das Aussehen der Wand beeinträchtigen und deshalb unerwünscht sind.

Ein weiteres Befestigungselement (DE-A1-2 712 148) besteht aus drei Teilen, nämlich einem Dübel, einer Schraube und einer schlauchartigen Hülle. Die Hülle umgibt die Schraube in dem Bereich, in dem sie ein zu befestigendes Bauteil durchgreift. Die Hülle bildet einen Korrosionsschutz nur im Bereich des Schraubenschaftes, nicht jedoch im Bereich des Schraubenkopfes, der von der Hülle nicht abgedeckt ist. Das Befestigungselement hat keine spezielle Druckplatte, sondern nur einen Schraubenkopf normaler Größe, der nicht geeignet ist, wärmeisolierende Platten aus Werkstoffen von geringer Festigkeit festzuhalten. Auch bei diesem Befestigungselement bildet die Schraube eine wärmeleitende Brücke.

Der Erfindung liegt die Aufgabe zugrunde, ein Befestigungselement der eingangs genannten Art so auszubilden, daß das Metall des Spreizstiftes vor Feuchtigkeit geschützt ist und Wärmeleitung durch den Spreizstift bis zu seinem äußeren Ende hin vermieden wird.

Diese Aufgabe wird nach der Erfindung dadurch gelöst, daß der Spreizstift im Bereich seines hinteren Endes mit Kunststoff ummantelt ist, wobei die Ummantelung auch die hintere Stirnfläche des Spreizstiftes umhüllt und daß bei eingeschlagenem Spreizstift dieser in seinem ummantelten Bereich dicht am Halteteil anliegt und die Hülsenbohrung nach außen abschließt.

Wenn der Spreizstift eingeschlagen ist, ist das Metall (in der Regel Stahl) des Spreizstiftes dadurch gegen Feuchtigkeit geschützt, daß die Feuchtigkeit nur an mit Kunststoff ummantelte Teile des Spreizstiftes gelangen kann, infolge der dichten Anlage des ummantelten Bereiches am Halteteil jedoch nicht an die Stellen des Spreizstiftes gelangen kann, die nicht ummantelt sind. Der Spreizstift erstreckt sich über die gesamte Dicke der zu haltenden Platte und hat deshalb eine gute Unterstützungswirkung für die Platte auch noch dann, wenn der Halteteil zerstört ist. Außer dem Schutz vor Feuchtigkeit bewirkt die Kunststoffummantelung auch eine Wärmeisolierung, d. h. sie behindert den Wärmefluß über den Spreizstift in die Umgebung. Das erfindungsgemäße Befestigungselement kann im Lieferzustand mit dem Spreizstift zusammengesteckt sein, so daß bei Lagerung und Verarbeitung nur ein einziger Gegenstand gehandhabt werden muß.

Vorzugsweise hat der Spreizstift an seinem hinteren Ende einen Kopf (Anspruch 2). Wenn ein Metallstift ohne Kopf verwendet wird, wird der Kopf voll aus Kunststoff hergestellt. Es kann jedoch auch ein Metallteil mit Kopf verwendet werden, der dann von Kunststoff nur noch umhüllt wird. Mit Hilfe eines Kopfes am Spreizstift wird einmal das Einschlagen und zum anderen auch die Abdichtung erleichtert. Vorzugsweise liegt der Kopf gemäß Anspruch 3 innerhalb einer Vertiefung des Halteteiles. Man erreicht auf einfache Weise eine Abdichtung, wenn hierzu gemäß Anspruch 4 die Unterseite des Kopfes als Dichtfläche benutzt wird. Man kann jedoch zusätzlich oder auch alternativ nur am Umfang des Kopfes abdichten (Anspruch 5).

Mit einem besonderen Absatz unterhalb des Kopfes gemäß Anspruch 6 wird die Dichtung noch sicherer, da eine Art Dichtungslabyrinth gebildet wird. Der Spreizstift kann gemäß Anspruch 7 über einen Teil seiner Länge ummantelt sein (Anspruch 7). Auch diese Ummantelung kann gemäß Anspruch 8 durch passendes Eingreifen in die Hülsenbohrung zur Dichtung herangezogen werden. Der vordere Spreizbereich des Spreizstiftes bleibt vorteilhafterweise von einer Ummantelung frei (Anspruch 9). Dies hat den Vorteil, daß die Spreizung zuverlässig bewirkt wird und ein guter Eingriff zwischen Spreizstift und Dübelhülse entsteht.

Eine besonders gute Verankerung des Kunststoffes auf dem Metallteil erreicht man mit Unebenheiten gemäß Anspruch 10. Der Spreizstift kann als glatter Nagel ausgebildet sein. Vorzuziehen ist jedoch die Ausbildung als sogenannter Nagelschraube gemäß Anspruch 11.

Gemäß einer vorteilhaften Weiterbildung der Erfindung hat die Kunststoffummantelung des Spreizstiftes eine andere Farbe als der Halteteil (Anspruch 12). Dadurch läßt sich der Spreizstift leicht vom Halteteil unterscheiden, was eine Sichtprüfung erleichtert, bei der festgestellt werden soll, ob der Spreizstift vollständig eingeschlagen ist. Die andere Einfärbung kann auch benutzt werden, um zu kontrollieren, ob die richtigen Spreizstiftlängen verwendet worden sind, wenn man jeder Spreizstiftlänge eine besondere Farbe zuordnet.

Gemäß einer weiteren Ausgestaltung der Erfindung (Anspruch 13) hat der Halteteil an der Unterseite der Druckplatte Vertiefungen, die vorzugsweise hinterschnitten sind. Dadurch kann man eine zusätzliche Verankerung zwischen zu befestigender Platte und Befestigungselement erzielen, wenn über der Druckplatte ein Kleber angebracht wird, der sich in den hinterschnittenen Vertiefungen verankert. Nockenartige Erhebungen an der Oberseite der Druckplatte gemäß Anspruch 14 haben den Vorteil, daß sich ein aufgebrachter Kleber gut an der Druckplatte verankert und dazu beiträgt, das Plattengewicht auf dem Befestigungselement abzustützen.

In der Zeichnung ist ein Ausführungsbeispiel der Erfindung dargestellt. Es zeigen :

Figur 1 einen Längsschnitt durch ein Befestigungselement entsprechend der Linie I-I in Fig. 2, wobei der Spreizstift in das Halteteil eingesteckt, jedoch noch nicht in seine Spreizstellung eingeschlagen ist,

Figur 2 eine Draufsicht auf das Befestigungselement entsprechend dem Pfeil II in Fig. 1,

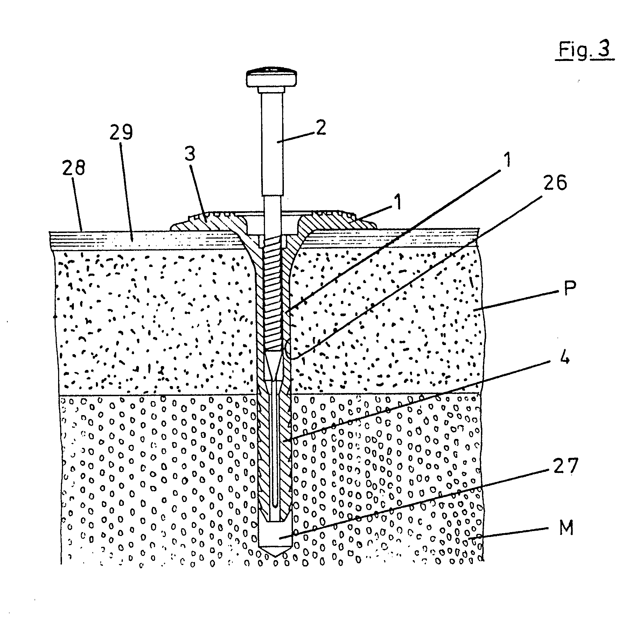

Figur 3 im Längsschnitt den Zustand nach dem Durchstecken eines Befestigungselementes durch eine zu befestigende Platte, jedoch vor seiner Fixierung im Mauerwerk und

Figur 4 im Längsschnitt den Zustand nach vollständigem Einschlagen des Spreizstiftes.

Das insgesamt mit B bezeichnete Befestigungselement hat einen Halteteil 1 und einen Spreizstift 2.

Der Halteteil 1 besteht aus einer Druckplatte 2 und einer Dübelhülse 4, die einstückig mit der Druckplatte 3 ausgebildet ist. Der Halteteil 1 insgesamt ist ein Kunststoff-Spritzteil.

Die Dübelhülse 4 hat einen vorderen Spreizabschnitt 5, der einen diametralen Schlitz 6 aufweist, der es ermöglicht, daß die beiderseits des Schlitzes befindlichen Bereiche des Spreizabschnittes auseinandergespreizt werden können. Am unteren Ende 7 ist der Querschnitt wieder geschlossen.

Die Hülsenbohrung besteht aus einem hinteren Abschnitt 8 von relativ großem Durchmesser und einem vorderen Abschnitt 9 von wesentlich kleinerem Durchmesser. Oberhalb des Abschnittes 8 der Hülsenbohrung schließt ein kurzer erweiterter Abschnitt 10 an, der in eine Vertiefung 11 einmündet, die teilweise im Bereich der Druckplatte 3 liegt. Der Durchmesser der Vertiefung 11 ist größer als der Durchmesser des Abschnittes 10. Die Vertiefung 11 hat eine hohlzylindrische Wand 11a, die über eine Abrundung 12 in die Oberseite der Druckplatte 3 übergeht. Die Bodenfläche 11b der Vertiefung 11 ist eben. Der erweiterte Abschnitt 10 hat ebenfalls eine hohlzylindrische Wand 10a.

In der Druckplatte 3 befindet sich ein Kranz aus insgesamt fünf Löchern 13, von denen jedes aus einem unteren Abschnitt 13a von relativ großem Durchmesser und einem oberen Abschnitt 13b von relativ kleinem Durchmesser besteht. Der untere Abschnitt 13a hat eine Umfangswand 14, die sich von unten nach oben erweitert, d. h. der Abschnitt 13a ist hinterschnitten. Die Oberseite der Druckplatte 3 weist nockenartige Erhebungen 13c auf.

Die Dübelhülse 4 hat einen oberen glatten Teil 15 und einen unteren widerhakenartig gezahnten Abschnitt 16, wie dies bei Dübeln üblich ist.

Der Spreizstift 2 besteht aus einem Metallstift, vorzugsweise einem Stahlstift 17 und einem Kunststoffüberzug 18. Der Stahlstift 17 hat an seinem vorderen Ende eine Nagelspitze 19. An die Nagelspitze schließt ein Gewindeteil 20 an, der ein widerhakenartig profiliertes Gewinde aufweist, wobei die Profilierung so orientiert ist, daß sie das Herausziehen des Spreizstiftes aus dem Halteteil 1 erschwert.

Im oberen Bereich des Spreizstiftes befinden sich umlaufende parallele Rillen 21, durch die eine Verzahnung mit dem Kunststoffüberzug 18 bewirkt wird. Zwischen dem Gewinde 20 und den Rillen 21 befindet sich ein kurzer glatter Abschnitt 22.

Der Kunststoffüberzug 18 umhüllt den Stahlstift 17 im Bereich der Verankerungsrillen 21. Dieser Teil der Umhüllung ist mit 23 bezeichnet ; er hat eine relativ geringe Dicke und eine zylindrische Außenfläche. Am hinteren Ende bildet der Kunststoffüberzug einen Kopf 24. Der Kopf hat eine kugelförmig gekrümmte Oberseite 24a und eine zylindrische Umfangsfläche 24b. Unterhalb des Kopfes 24a befindet sich ein Abschnitt 25, der eine zylindrische Außenfläche 25a hat, deren Durchmesser wesentlich kleiner ist als der Durchmesser der zylindrischen Außenfläche 24b des Kopfes 24, jedoch größer als der Außendurchmesser des Abschnittes 23 des Kunststoffüberzuges.

Der Kunststoffüberzug besteht aus thermoplastischem Kunststoff und wird durch Umspritzen des Stahlstiftes 17 hergestellt. Der Kunststoff, aus dem der Überzug 18 besteht, ist derart eingefärbt, daß er sich farblich vom Halteteil 1 abhebt. Der Halteteil kann ebenfalls aus eingefärbtem Kunststoff oder aber auch aus farblosem thermoplastischem Kunststoff bestehen.

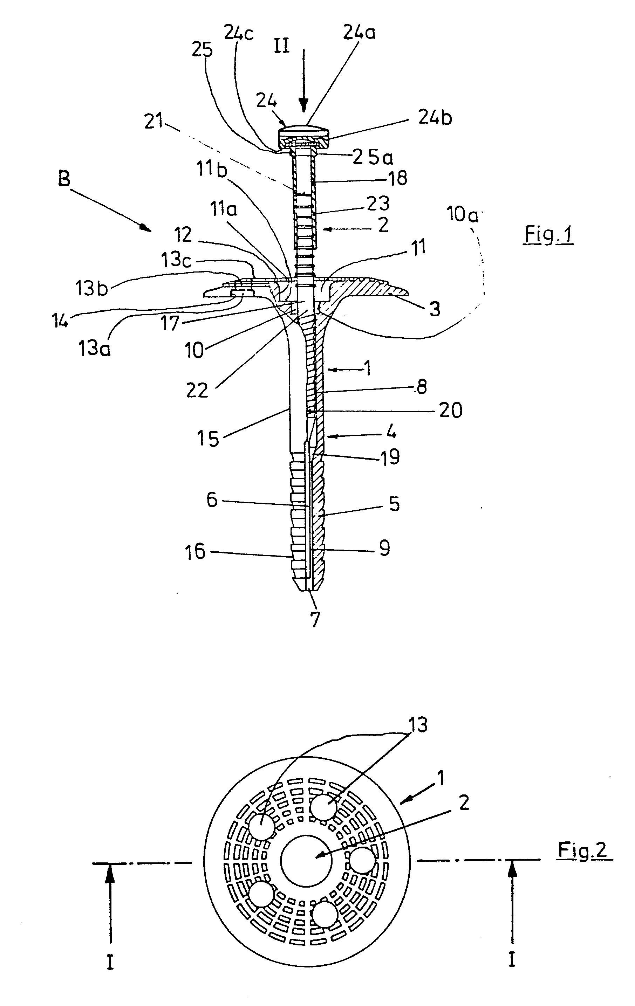

Im Lieferzustand ist der Spreizstift 2 so in den Halteteil 1 eingeschoben, wie es Fig. 1 zeigt, d. h. so weit, daß er unverlierbar gehalten ist. Bei der Montage einer Isolierplatte P kann der Spreizstift 2 ein wenig zurückgezogen werden. Der Halteteil 1 wird mit seiner Dübelhülse 1 durch ein Loch 26 in der Platte P hindurchgesteckt. Die Dübelhülse 4 wird nach dem Hindurchführen durch die Platte P in ein Dübelloch 27 eingeführt, das zuvor in das Mauerwerk M gebohrt wurde.

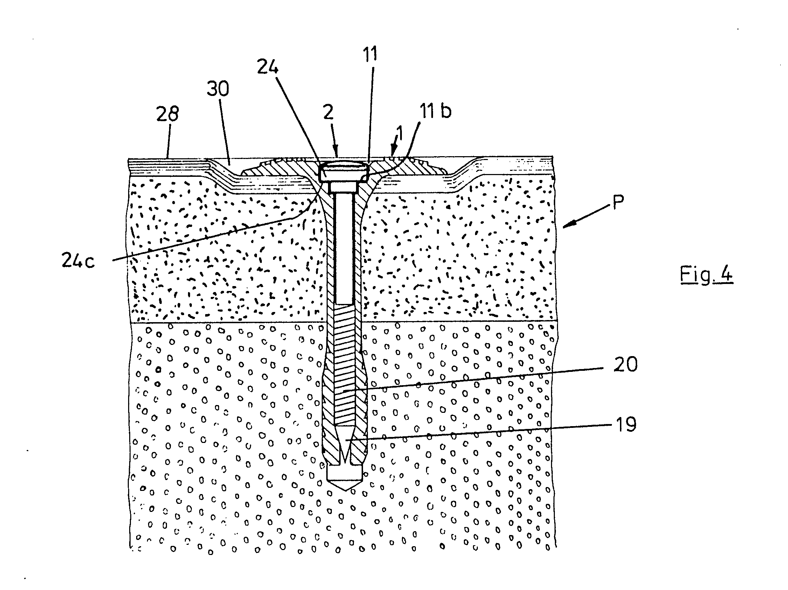

Der Dübel wird zunächst so weit eingeführt, bis die Druckplatte 3 an der Oberfläche 28 der Platte P anliegt. Diese Oberfläche wird im dargestellten Fall durch ein Gewebe 29 gebildet, mit dem die Platte P überzogen ist. Anschließend wird der Spreizstift 2 mittels Hammerschlägen in den Halteteil 1 eingetrieben, wobei der Gewindeteil 20 des Spreizstiftes in den engen vorderen Abschnitt 9 der Hülsenbohrung getrieben wird. Dieses Eintreiben wird durch die Nagelspitze 19 erleichtert. Die beiderseits des Schlitzes 6 befindlichen Dübelteile werden dadurch auseinandergespreizt, wie es in Fig. 4 dargestellt ist. Mit dem Eintreiben des Spreizstiftes 2 wird auch der Halteteil 1 noch weiter vorgetrieben, wobei er sich in die Platte P eindrückt. Hierbei wird eine Vertiefung 30 gebildet, die vorzugsweise so tief ist, daß der Halteteil nicht mehr über die Plattenoberfläche 28 vorsteht.

Bei voll eingetriebenem Spreizstift 2 liegt die ebene Unterseite 24c des Kopfes 24 an der ebenen Fläche 11b der Vertiefung 11 an, wodurch eine Abdichtung erzielt wird. Außerdem wird eine radiale Abdichtung an drei Stellen erreicht. Die erste radiale Abdichtungsstelle wird durch Anlage der Umfangsfläche 24b des Kopfes 24 an der Innenfläche 11a der Vertiefung 11 erzielt. Die zweite radiale Abdichtung wird durch Anlage der Umfangsfläche 25a des Abschnittes 25 an der Umfangsfläche 10a des erweiterten Abschnittes 10 hergestellt. Eine dritte radiale Abdichtung wird durch Anlage des Abschnittes 23 des Kunststoffüberzuges an der glatten Bohrung 8 der Dübelhülse erzielt. Dadurch wird eine sehr große Sicherheit gegen Eindringen von Feuchtigkeit in die Dübelhülse bis hin zu dem ungeschützten Gewindeabschnitt 20 erreicht.

Auch wenn der Spreizstift nicht vollständig eingetrieben ist, wird bereits eine Abdichtung erzielt dank den verschiedenen radialen Abdichtungsstellen, die eine relativ sichere Abdichtung auch schon dann ergeben, wenn die Unterfläche 24c des Kopfes nicht zur Anlage am Halteteil 1 gekommen ist.

**Patentansprüche**

1. Befestigungselement (B) für die Befestigung von wärme- und schallisolierenden Platten (P) an einer Unterkonstruktion (M), mit einem Halteteil (1), der eine großflächige Druckplatte (3) aus Kunststoff und eine mit der Druckplatte (3) einstückige Hülse (4) in Form eines Spreizdübels aufweist und einem Spreizstift (2) aus Metall, der in die Hülse (4) einschlagbar ist und im eingeschlagenen Zustand bis zur Druckplatte (3) reicht, dadurch gekennzeichnet, daß der Spreizstift (2) im Bereich seines hinteren Endes mit Kunststoff (18) ummantelt ist, wobei die Ummantelung (18) auch die hintere Stirnfläche (24a) des Spreizstiftes (2) umhüllt und daß bei eingeschlagenem Spreizstift (2) dieser in seinem ummantelten Bereich (18) dicht am Halteteil (1) anliegt und die Hülsenbohrung (8) nach außen abschließt.

2. Befestigungselement nach Anspruch 1, dadurch gekennzeichnet, daß der Spreizstift (2) an seinem hinteren Ende einen Kopf (24) aufweist, der mindestens an seiner gesamten Außenfläche aus Kunststoff besteht.

3. Befestigungselement nach Anspruch 2, dadurch gekennzeichnet, daß der Halteteil (1) eine Vertiefung (11) aufweist, die den Kopf (24) des Spreizstiftes (2) bei voll eingeschlagenem Spreizstift (2) aufnimmt.

4. Befestigungselement nach Anspruch 3, dadurch gekennzeichnet, daß der Kopf (24) bei voll eingeschlagenem Spreizstift (2) mit seiner Unterfläche (24c) dicht an einer Anlagefläche (11b) des Halteteiles (1) anliegt.

5. Befestigungselement nach einem der Ansprüche 3 und 4, dadurch gekennzeichnet, daß die Vertiefung (11) eine vorzugsweise kreisrunde Umfangsfläche (11a) hat, die bei eingeschlagenen Spreizstift (2) dicht an der Umfangsfläche (24b) des Spreizstiftkopfes (24) anliegt.

6. Befestigungselement nach einem der Ansprüche 2 bis 5, dadurch gekennzeichnet, daß unterhalb des Kopfes (24) ein vorzugsweise zylindrischer Absatz (25) angeordnet ist, dessen Durchmesser kleiner als der Kopfdurchmesser und größer als der Spreizstiftdurchmesser ist und daß die Hülsenbohrung (8, 9, 10) im Halteteil (1) einen Abschnitt (10) aufweist, in den der Absatz (25) dichtend eingreift.

7. Befestigungselement nach einem der vorhergehenden Ansprüche, dadurch gekennzeichnet, daß der Spreizstift (2) ausgehend von seinem hinteren Ende über einen Teil seiner Länge mit Kunststoff ummantelt ist (Abschnitt 23).

8. Befestigungselement nach Anspruch 7, dadurch gekennzeichnet, daß der ummantelte Teil (23) des Spreizstiftes (2) passend in die Hülsenbohrung (8) des Halteteiles (1) eingreift.

9. Befestigungselement nach einem der Ansprüche 7 und 8, dadurch gekennzeichnet, daß der vordere Spreizbereich (20) des Spreizstiftes (2) von einer Ummantelung frei ist.

10. Befestigungselement nach einem der vorhergehenden Ansprüche, dadurch gekennzeichnet, daß der Spreizstift (2) im Bereich der Kunststoffummantelung (18) mit Unebenheiten versehen ist, z. B. mit einem Gewinde oder mit umlaufenden Rillen (21).

11. Befestigungselement nach einem der vorhergehenden Ansprüche, dadurch gekennzeichnet, daß der Spreizstift (2) als Nagelschraube mit Nagelspitze (19) und daran anschließendem Gewinde (20) ausgebildet ist.

12. Befestigungselement nach einem der vorhergehenden Ansprüche, dadurch gekennzeichnet, daß die Kunststoffummantelung (18) des Spreizstiftes (2) eine andere Farbe hat als der Halteteil (1).

13. Befestigungselement nach einem der vorhergehenden Ansprüche, dadurch gekennzeichnet, daß der Halteteil (1) an der Unterseite der Druckplatte (3) Vertiefungen (13a) aufweist, die vorzugsweise hinterschnitten sind.

14. Befestigungselement nach einem der vorhergehenden Ansprüche, dadurch gekennzeichnet, daß der Halteteil (1) an der Oberseite der Druckplatte (3) nockenartige Erhebungen (13c) aufweist.

## Claims

1. Fastening element (B) for fastening heat- and sound-insulating plates (P) to a sub-structure (M), having a retaining part (1), which comprises a pressure plate (3) of plastics material and with a large surface area, a sleeve (4) which is integral with the pressure plate (3) and which is in the form of a straddling dowel, and an expanding pin (2) made of metal, which can be knocked into the sleeve (4) and which extends as far as the pressure plate in the knocked-in position, characterised in that the expanding pin (2) is coated with plastics material (18) in the region of its rear end, the said coating (18) also covering the rear end face (24a) of the expanding pin (2), and when the expanding pin (2) is knocked in it rests with its coated area (18) closely against the retaining part (1) and seals the sleeve bore (8) from the outside.

2. Fastening element (B) according to claim 1, characterised in that the expanding pin (2) comprises a head (24) on its rear end, at least the entire outer surface of which is made of plastics material.

3. Fastening element according to claim 2, characterised in that the retaining part (1) comprises a recess (11), which receives the head (24) of the expanding pin (2) when the expanding pin (2) is fully knocked in.

4. Fastening element according to claim 3, characterised in that the underside (24c) of the head (24) rests closely against a bearing surface (11b) of the retaining part (1) when the expanding pin (2) is fully knocked in.

5. Fastening element according to claim 3 or 4, characterised in that the recess (11) comprises a preferably circular peripheral surface (11a), which rests closely against the peripheral surface (24b) of the expanding pin head (24) when the expanding pin (2) is knocked in.

6. Fastening element according to any one of claims 2 to 5, characterised in that a preferably cylindrical projection (25) is arranged below the head (24), the diameter of which projection is smaller than the diameter of the head and larger than the diameter of the expanding pin, and the sleeve bore (8, 9, 10) comprises a section (10) in the retaining part (1), in which the projection (25) engages in a sealing-tight manner.

7. Fastening element according to any one of the preceding claims, characterised in that the expanding pin (2) is coated with plastics material from its rear end across a portion of its length (section 23).

8. Fastening element according to claim 7, characterised in that the coated portion (23) of the expanding pin (2) engages snugly in the sleeve bore (8) of the retaining part (1).

9. Fastening element according to claim 7 or 8, characterised in that the front expanding region (20) of the expanding pin (2) is not coated.

10. Fastening element according to any one of the preceding claims, characterised in that the expanding pin (2) is provided in the region of the plastics material coating (18) with depressions, e. g. a thread or with circumferential ridges (21).

11. Fastening element according to any one of the preceding claims, characterised in that the expanding pin (2) is formed as a screw nail having a nail head (19) and a connecting thread (20).

12. Fastening element according to any one of the preceding claims, characterised in that the plastics material coating (18) of the expanding pin (2) has a different colour than the retaining part (1).

13. Fastening element according to any one of the preceding claims, characterised in that the retaining part (1) comprises recesses (13a) on the underside of the pressure plate (3), which are preferably undercut.

14. Fastening element according to any one of the preceding claims, characterised in that the retaining part (1) comprises cam-like projections (13c) on the top of the pressure plate (3).

## Revendications

1. Elément de fixation (B) pour fixer des plaques calorifuges et insonorisantes (P) sur une structure de soubassement (M), comprenant une partie de maintien (1) qui comporte une plaque de pression (3) à grande surface en matière synthétique et une douille (4) d'une seule pièce avec la plaque de pression (3), et ayant la forme d'un tampon extensible, et une cheville d'écartement (2) en métal, pouvant être introduite à force dans la douille (4) et arrivant jusqu'à la plaque de pression (3) une fois introduite, caractérisé en ce que la cheville d'écartement (2) est enveloppée par de la matière synthétique (18) dans la région de son extrémité arrière, l'enveloppe (18) enfermant également la surface frontale arrière (24a) de la cheville d'écartement (2), et en ce que, la cheville d'écartement (2) étant enfoncée, celle-ci s'applique de façon étanche par sa région enveloppée (18) contre la partie de maintien (1) et ferme vers l'extérieur le perçage (8) de la douille.

2. Elément de fixation selon la revendication 1, caractérisé en ce que la cheville d'écartement (2) présente, à son extrémité arrière, une tête (24), constituée en matière synthétique, au moins sur toute sa surface extérieure.

3. Elément de fixation selon la revendication 2, caractérisé en ce que la partie de maintien (1) comporte un renfoncement (11) qui reçoit la tête (24) de la cheville d'écartement (2) lorsque cette cheville (2) a été complètement enfoncée.

4. Elément de fixation selon la revendication 3, caractérisé en ce que, lorsque la cheville d'écartement (2) est complètement enfoncée, la tête (24) s'applique, par sa surface inférieure (24c), de façon étanche, contre une surface d'application (11b) de la partie de maintien (1).

5. Elément de fixation selon l'une des revendications 3 et 4, caractérisé en ce que le renfoncement (11) comporte une surface périphérique (11a), de préférence circulaire, qui s'applique de façon étanche, lorsque la cheville d'écartement (2) est enfoncée, contre la surface périphérique (24b) de la tête de ladite cheville.

6. Elément de fixation selon l'une des revendications 2 à 5, caractérisé en ce que, sous la tête (24), il est prévu un gradin (25), de préférence cylindrique, dont le diamètre est plus petit que le diamètre de la tête et plus grand que celui de la cheville d'écartement et en ce que le perçage de douille (8, 9, 10) comporte, dans la partie de maintien (1), une portion (10) dans laquelle le gradin (25) entre de façon étanche.

7. Elément de fixation selon l'une des revendications précédentes, caractérisé en ce que la cheville d'écartement (2) est enveloppée par une matière synthétique, en partant de son extrémité arrière, sur une partie de sa longueur (portion 23).

8. Elément de fixation selon la revendication 7, caractérisé en ce que la partie enveloppée (23) de la cheville d'écartement (2) entre avec ajustement dans le perçage de douille (8) de la partie de maintien (1).

9. Elément de fixation selon l'une des revendications 7 et 8, caractérisé en ce que la région d'écartement avant (20) de la cheville d'écartement (2) est dépourvue d'enveloppe.

10. Elément de fixation selon l'une des revendications précédentes, caractérisé en ce que la cheville d'écartement (2) est pourvue d'inégalités dans la région de l'enveloppe de matière synthétique (18), par exemple d'un filetage ou de rainures circulaires (21).

11. Elément de fixation selon l'une des revendications précédentes, caractérisé en ce que la cheville d'écartement (2) est constituée sous forme d'un clou fileté avec pointe aiguë (19) et un filetage (20) s'y raccordant.

12. Elément de fixation selon l'une des revendications précédentes, caractérisé en ce que l'enveloppe de matière synthétique (18) de la cheville d'écartement (2) a une couleur autre que celle de la partie de maintien (1).

13. Elément de fixation selon l'une des revendications précédentes, caractérisé en ce que la partie de maintien (1) comporte, à la face inférieure de la plaque de pression (3), des renfoncements qui ont de préférence une forme en dépouille.

14. Elément de fixation selon l'une des revendications précédentes, caractérisé en ce que la partie de maintien (1) comporte, sur la face supérieure de la plaque de pression (3), des saillies (13c) en forme d'ergots.

Fig. 1

Fig. 2

Fig.3

Fig. 4

0 074 469